# EUROPÄISCHE PATENTSCHRIFT

(11) **EP 0 798 027 B1**
(45) Veröffentlichungstag und Bekanntmachung des Hinweises auf die Patenterteilung: **12.06.2002**
(21) Anmeldenummer: 97104475.5
(22) Anmeldetag: 15.03.1997
(51) Int. Cl.: B01D 46/42, F24F 13/28

(54) **Dichtungsanordnung für Filterkasten**
Seal arrangement for filter boxes
Dispositif d'étanchéité pour boîtiers de filtres

(30) Priorität: 26.03.1996 DE 19611817
(43) Veröffentlichungstag der Anmeldung: 01.10.1997
(73) Patentinhaber: Schako Metallwarenfabrik Ferdinand Schad KG, D-78600 Kolbingen (DE)
(72) Erfinder: Müller, Gottfried, 78600 Kolbingen (DE)
(74) Vertreter: Weiss, Peter, Dr. rer. nat.

(56) Entgegenhaltungen:
- EP-A- 0 202 110
- WO-A-96/37738
- DE-C- 3 831 891
- US-A- 4 175 936
- US-A- 4 608 066
- US-A- 4 986 050
- US-A- 5 540 028

## Beschreibung

Die vorliegende Erfindung betrifft einen Filterkasten mit einem Gehäuse, in welchem eine Filterzelle wiederlösbar an einer Halterung festgelegt ist, welche einen oberen Raum von einem unteren Raum innerhalb des Gehäuses trennt und eine Öffnung umgrenzt, durch welche die Filterzelle in den oberen Raum eingesetzt ist, wobei zwischen einer umlaufenden Dichtleiste der Filterzelle und der Halterung eine Dichtung vorgesehen ist.

Derartige Filterkästen gibt es in vielfältiger Form und Ausführung. Sie finden vor allem in Krankenhäusern, Intensivstationen, in Operationsräumen und bei sterilen Forschungs- und Entwicklungslaboratorien, wie bspw. in der Elektronik und Kerntechnik, aber auch in biologisch reinen Räumen Anwendung. Der Filterkasten dient dazu, jegliche Luftverunreinigungen aus der in den entsprechenden Raum einzubringenden Luft auszufiltern.

Bei bisher bekannten Filterkästen wird infolge von Schwierigkeiten der Befestigung der Filterzelle ein aufwendig hergestellter Filterkasten verwendet, in dem eine relativ kleine Filterzelle sitzt.

Dabei geht einerseits viel Raum verloren und andererseits läßt sich diese Filterzelle schlecht auswechseln.

Außerdem ist die Wartung derartiger Filterkästen problematisch, da bei der Entnahme entweder das gesamte System abgestellt werden muß, oder während der Wartungsarbeit verschmutzte Luft in den Raum gelangt, was unerwünscht ist.

Ferner ist bei herkömmlichen Filterkästen nach einer Reinigung einer solchen Filterzelle bzw. nach einem Auswechseln dieser Filterzelle oftmals durch die komplexe und komplizierte Einbauweise eine erforderliche Abdichtung der Filterzelle gegenüber den umliegenden Anbauteilen unzureichend. Zudem soll die Filterzelle sehr schnell und leicht ausgewechselt bzw. gereinigt werden können.

Aus der DE-C-38 31 891 ist ein Staubfilter mit einem Filterelement in einem Filtergehäuse bekannt. Das Filterelement ist an einer Halterung, die das Filtergehäuse in einen oberen und einen unteren Raum trennt, wiederlösbar festgelegt. Zwischen der Halterung und einer Dichtleiste des Filters findet sich eine Dichtung.

Der vorliegenden Erfindung liegt die Aufgabe zugrunde, die o. g. Nachteile zu beseitigen und einen universell einsetzbaren und leicht handhabbaren Filterkasten zu schaffen, welcher ein schnelles Auswechseln bzw. Reinigen der Filterzelle zuläßt, hohe Anforderungen an ein dichtes Einsetzen erfüllt und zudem kostengünstig herzustellen ist.

Zur Lösung dieser Aufgabe führt, daß die Dichtung eine gelartige Fluid-Dichtmasse ist, die sich in einer umlaufenden Wanne befindet, die nach oben offen ist, wobei die Dichtleiste auf die Dichtmasse aufgesetzt ist.

Die Erfindung gestattet, daß eine innerhalb des Gehäuses angeordnete umlaufende Halterung, welche einen bevorzugt nach unten abgewinkelten Dichtstreifen aufweist, als Träger bzw. Dichtungsblech für die in das Gehäuse einzusetzende Filterzelle dient.

Dabei ist das Dichtungsblech über einen Falz umlaufend in dem Gehäuse festgelegt, so daß auch wandseitig ein abgeschottetes System entsteht, welches einen oberen und einen unteren Raum innerhalb des Gehäuses im Bereich des Dichtungsbleches abgedichtet trennt.

Nach innen bildet der umlaufende Dichtstreifen des Dichtungsbleches eine Öffnung, durch welche die Filterzelle eingesetzt wird. Diese wird auf eine entsprechend umlaufende Wanne und insbesondere auf die dort eingefüllte Dichtmasse aufgesetzt. Dabei berührt umlaufend eine Dichtleiste der Filterzelle die Oberfläche der Dichtmasse. Da die Dichtmasse erfindungsgemäß als gelartige Fluid Dichtmasse ausgebildet ist, benetzt bzw. taucht die Dichtleiste der Filterzelle leicht in diese ein, wobei eine völlig hermetische Abdichtung zwischen Dichtleiste und Dichtmasse entsteht. Damit auch der Bereich von Wanne und Dichtungsblech abgeschottet ist, greift der umlaufende Dichtstreifen ebenfalls in die Wanne und insbesondere in die Dichtmasse ein. Unter Wanne wird im übrigen jede Möglichkeit der Aufnahme der gelartigen Dichtmasse verstanden.

Der Winkel zum Festlegen der Wanne an dem Dichtungsblech kann mittels Befestigungselementen und Rändelschrauben an dem Dichtungsblech leicht festgelegt werden. Auch hier können mehrere, an verschiedenen Stellen geteilt angeordnete Befestigungselemente unterschiedlichster Art vorgesehen sein, um eine gleichmäßige Aufnahme bzw. Auflagerung der Filterzelle zu erlangen. Hier sollen jedoch auch andere Möglichkeiten des Festlegens der Wanne am Gehäuse bzw. am Dichtungsblech im Rahmen der Erfindung liegen, wie bspw. Schnellverschlüsse zum Einklipsen od. dgl.

Ein wesentlicher Vorteil, der sich hier durch diese Abdichtungsweise ergibt, ist auch, daß bspw. nach einem Austauschen der Filterzelle, die neue Filterzelle in die Fluid-Dichtmasse eintaucht und eine erneut hermetisch umlaufende, vollständige Dichtung geschaffen wird. Zudem bleibt diese Dichtmasse über sehr lange Zeit sehr elastisch, so daß auch hier durch Materialermüdung der Dichtleiste einer Filterzelle bzw. der Dichtmasse eine hermetische Abdichtung nicht gefährdet ist. Insofern kann die Luft, welche dem Raum zugeführt werden soll, durch den Anschlußstutzen in das Gehäuse und insbesondere in den oberen Raum gelangen und durchströmt ausschließlich nur die Filterzelle, wobei Staub, Verunreinigungen, Keime und dgl. Partikel in der Luft vom Filtermaterial aufgefangen werden.

Die Luft strömt anschließend in den unteren Raum und wird durch einen zusätzlich in das Gehäuse eingesetzen Auslaßeinsatz in den umgebenden Raum ausgebracht. Diese Auslaßeinsätze können herkömmlicher Art sein, wobei hier daran gedacht ist, diese über ein einziges Befestigungselement an einer der Wanne zugeordneten Traverse festzulegen. Auch dabei ist ein schnelles Einsetzen bzw. Ausbauen des Auslaßeinsatzes möglich, indem durch Lösen der Rändelmuttern komplett die Wanne mit der Filterzelle aus der Einschuböffnung des Gehäuses entnommen wird.

Ein weiterer Vorteil der Erfindung ist auch, daß die Wanne mit der Dichtmasse selbst aus dem Gehäuse entnehmbar ist, wobei anschließend die Fluid-Dichtmasse ausgewechselt werden kann.

Im Rahmen der vorliegenden Erfindung sollen alle möglichen Formen des Gehäuses liegen, wie bspw. querschnittlich rechteckartig aber auch runde Formen. In diesem Fall wären die Wanne und die Dichtungsbleche entsprechend umlaufend rund bzw. kreisringartig ausgebildet.

Mit dem vorliegenden Filterkasten ist eine Erfindung geschaffen, welche auf lange Sicht eine dauerhafte Dichtung gewährleistet und ein schnelles Auswechseln und Reinigen der Filterzelle ermöglicht. Außerdem können eine Vielzahl von unterschiedlichen Auslaßeinsätzen herkömmlicher Bauart mit diesem Filterkasten verbunden werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen Querschnitt durch einen erfindungsgemäßen Filterkasten;
Figur 2 eine Draufsicht auf den Filterkasten gemäß Figur 1;
Figur 3 einen vergrößert dargestellten Querschnitt durch ein Teil des Filterkastens gemäß Figur 1;
Figur 4 einen vergrößert dargestellten Längsquerschnitt durch eine Verbindung zweier Traversen;
Figur 5 einen Querschnitt durch die Verbindung zweier Traversen gemäß Figur 4 entlang Linie IV-IV.

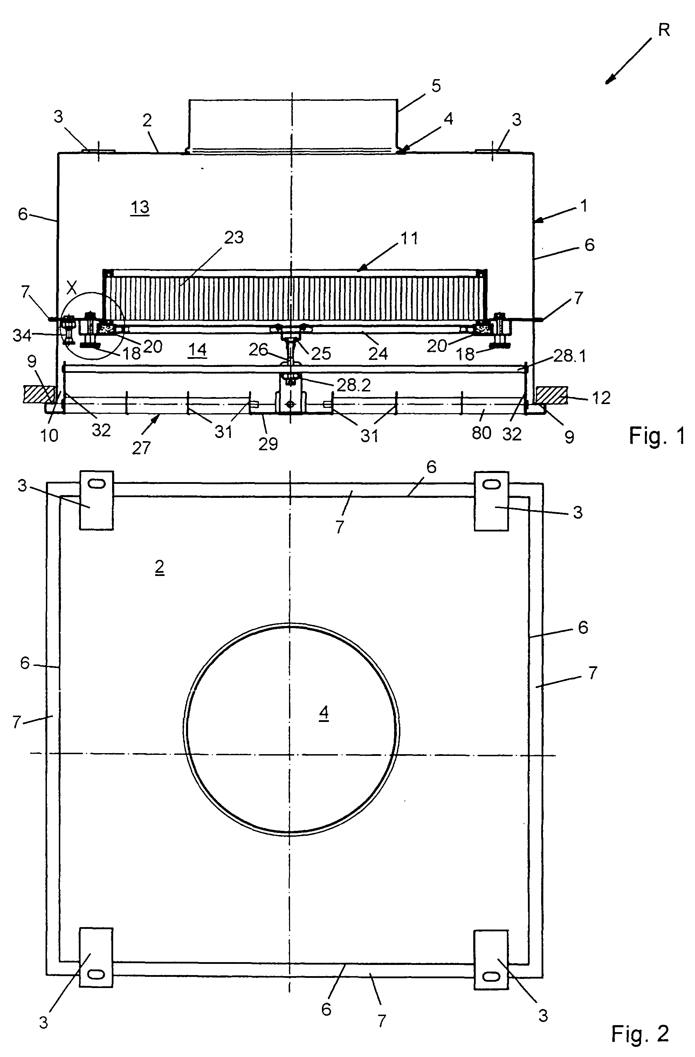

Gemäß Figur 1 weist ein erfindungsgemäßer Filterkasten R ein rechteckartiges oder quadratisches Gehäuse 1 auf, wobei eine Dachplatte 2 mit Befestigungslaschen 3 zur Festlegung des gesamten Filterkastens R, bspw. an einer hier nicht näher dargestellten Decke, versehen ist. In etwa mittig ist in die Dachplatte 2 eine Öffnung 4 eingeformt, in welche ein Anschlußstutzen 5 zum Zuführen von Luft eingreift.

An die Dachplatte 2 schließen allseits Seitenwände 6 an, die bevorzugt zusammen mit der Dachplatte 2 aus einem Blechstreifen hergestellt und von diesem abgekantet sind. In diesem Fall brauchen nur die Eckbereiche der Seitenwände 6 miteinander verbunden zu werden, um das Gehäuse 1 zu bilden.

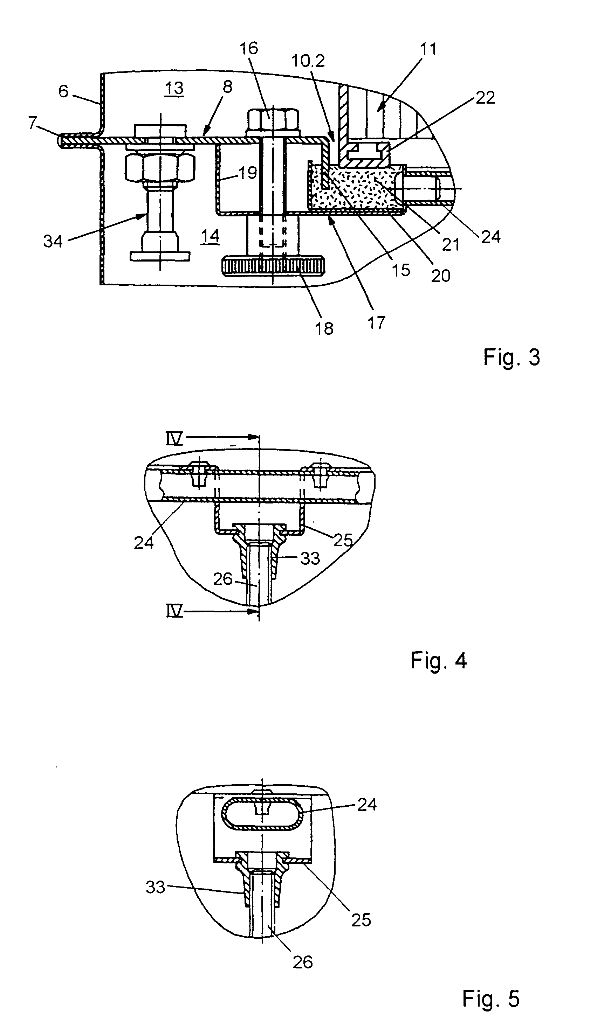

Etwa im unteren Drittel bildet jede Seitenwand 6 einen Falz 7 aus, welcher umlaufend auf gleicher Höhe über alle Seitenwände verläuft. In diesen Falz 7 ist innen ein umlaufendes Dichtungsblech 8, siehe Figur 3, eingeschoben und dort festgelegt.

Nach unten hin sind, wie in Figur 1 angedeutet, die Seitenwände 6 nach außen umgeschlagen und bilden eine Randkante 9, wobei innerhalb der Seitenwände 6 eine Einschuböffnung 10.1 gebildet ist, in welche eine Filterzelle 11 eingesetzt wird. Die Randkante 9 liegt dabei außen an einer Zwischendecke 12 an.

Wie in Figur 3 vergrößert dargestellt, greift das Dichtungsblech 8 in allen Seitenwänden 6 in den umlaufenden Falz 7 ein und trennt somit einen oberen Raum 13 von einem unteren Raum 14. Vom Dichtungsblech 8 ist zum unteren Raum 14 hin umlaufend im Bereich aller Seitenwände 6 ein Dichtstreifen 15 abgewinkelt.

Ferner ist in zumindest jedes Dichtungsblech 8 ein Befestigungselement 16 eingesetzt, welches einen bevorzugt L-förmigen Winkel 17 mittels einer leicht von Hand wiederlösbaren Rändelmutter 18 an dem Befestigungselement 16 festgelegt. Dabei wirkt ein nach oben abgewinkelter Streifen 19 des Winkels 17 als Anschlag an das Dichtungsblech 8.

Nach innen gerichtet ist auf den Winkel 17, welcher auch als einzelnes Blech und ggf. auch umlaufend über alle Seitenwände 6 ausgebildet sein kann, eine Wanne 20 aufgesetzt. Diese kann auch Bestandteil des Winkels 17 selbst sein. Die Wanne 20 ist U-förmig nach oben geöffnet und umlaufend über alle Seitenwände 6 ausgebildet und wird mit einer Dichtmasse 21, insbesondere mit einer gelartigen Fluidmasse gefüllt. In dieser Wanne 20 taucht der Dichtstreifen 15 in die Dichtmasse 21 ein, wodurch eine umlaufende Dichtung gebildet wird.

Erfindungsgemäß wird im ausgebauten Zustand der Wanne 20 das Filterelement 11 mit seinen umlaufenden Dichtleisten 22 auf die Dichtmasse 21 in der Wanne 20 gesetzt, wobei die elastische Fluidmasse leicht eingedrückt wird und mit der Dichtleiste 22 gegenüber der Wanne 20 umlaufend eine Dichtung bildet.

Anschließend wird die Wanne 20 mit dem aufgesetzten Filterelement 11 und dem Winkel 17 durch die Einschuböffnung 10.1 des Gehäuses 1 und das Filterelement 11 durch eine von dem umlaufenden Dichtstreifen 15 gebildete Öffnung 10.2 (siehe Fig. 3) eingeführt und an den Befestungselementen 16 des umlaufenden Dichtungsbleches 8 wiederlösbar festgelegt. Dabei greift der Dichtstreifen 15 in die Wanne 20 bzw. Dichtmasse 21 ein. Eine umlaufende Dichtung ist somit gewährleistet, sodaß keine Luft außerhalb der Filterzelle vom oberen Raum 13 in den unteren Raum 14 strömen kann. Die Luft muß also zwangsläufig durch die Filterzelle 11, insbesondere durch deren Filtermaterial 23 aus dem oberen Raum 13 in den unteren Raum 14 strömen, wobei Luft von Feinstpartikeln gereinigt wird. Diese Filterzellen 11 sind besonders für klinische Labors, Krankenhäuser und sterile For-schungs- und Entwicklungslaboratorien geeignet.

Ferner sind, wie in Figur 1 angedeutet, von Wanne 20 zu Wanne 20, Quer- oder auch Diagonaltraversen 24, 25 vorgesehen, welche miteinander verbunden sind.

In etwa mittig greift in eine AUfnahme 33 in der Traverse 25 ein Befestigungselement 26, welches zur Befestigung und Aufnahme eines Auslaßeinsatzes 27 dient. Der Auslaßeinsatz 27 ist herkömmlicher Bauart in die Einschuböffnung 10.1 wie-derlösbar eingesetzt ist. Dabei weist er Diagonalstreben 28.1, 28.2 auf, in welche das Befestigungselement 26 eingreift, um den Auslaßeinsatz 27 an der Traverse 24 oder 25 wiederlösbar festzulegen.

Die Diagonalstreben 28.1, 28.2 dienen der Festlegung des Auslaßeinsatzes 27, wie dies bspw. in der DE-OS 43 36 806.9 beschrieben ist. Hierbei weist der Auslaßeinsatz 27 ziffernblattartig angeordnete, nicht näher gezeigte, Luftschlitze in einer Auslaßplatte 29 (Fig. 1) auf, wobei diesen Luftschlitzen Luftlenklamellen 30 zugeordnet sind. Diese erstrecken sich zwischen Lagerplättchen 31 und Halteplättchen 32.

Durch entsprechende Öffnungen in den Halteplättchen 32 sind die Diagonalstreben 28.1, 28.2 als Traversenkreuz gesteckt, von welchem etwa mittig das Befestigungselement 26 aufragt. Dieses Befestigungselement 26 ist in die Diagonalstreben 28.1, 28.2 eingedreht, wodurch der gesamte Auslaßeinsatz 27 in der Einschuböffnung 10.1 wiederlösbar festgelegt wird. Dabei schlägt die im äußeren Bereich bevorzugt abgewinkelte Auslaßplatte 29 an den Randkanten 9 des Gehäuses 1 bzw. an der Zwischendecke 12 von unten her an.

In das Dichtungsblech 8 ist zumindest ein Meßstutzen 34 eingesetzt, mit dem eine Differenzdurchmessung zwischen dem oberen Raum 13 und dem unteren Raum 14 bzw. der Umgebungsluft durchgeführt wird, um die ordnungsgemäße Abdichtung des oberen Raumes 13 zu überprüfen.

## Patentansprüche

1. Filterkasten mit einem Gehäuse (1), in welchem eine Filterzelle (11) wiederlösbar an einer Halterung festgelegt ist, welche einen oberen Raum (13) von einem unteren Raum (14) innerhalb des Gehäuses (1) trennt und eine Öffnung (10.2) umgrenzt, durch welche die Filterzelle (11) in den oberen Raum (13) eingesetzt ist, wobei zwischen einer umlaufenden Dichtleiste (22) der Filterzelle (11) und der Halterung (8) eine Dichtung (21) vorgesehen ist,
**dadurch gekennzeichnet,**
**daß** die Dichtung (21) eine gelartige Fluid-Dichtmasse ist, die sich in einer umlaufenden Wanne befindet, die nach oben offen ist, wobei die Dichtleiste (22) auf die Dichtmasse (22) aufgesetzt ist.

2. Filterkasten nach Anspruch 1, **dadurch gekennzeichnet, daß** von der Halterung (8) ein Dichtstreifen (15) umlaufend und die Öffnung (10.2) bildend abgekantet ist, welcher ebenfalls neben den Dichtleisten (22) in die Dichtmasse (22) eintaucht.

3. Filterkasten nach Anspruch 1 oder 2, **dadurch gekennzeichnet, daß** die Wanne (20) mit einem Winkel (17) in Verbindung steht und dieser der Halterung (8) wiederlösbar zugeordnet ist.

4. Filterkasten nach Anspruch 3, **dadurch gekennzeichnet, daß** der Winkel (17) über einen abgewinkelten Streifen (19) mittels zumindest einem Befestigungselement (18) an der Halterung (8) wiederlösbar festlegbar ist.

5. Filterkasten nach wenigstens einem der Ansprüche 1 bis 4, **dadurch gekennzeichnet, daß** das Gehäuse (1) Seitenwände (6) aufweist, in welche ein umlaufender Falz (7) eingeformt ist.

6. Filterkasten nach Anspruch 5, **dadurch gekennzeichnet, daß** in den Falz (7) innerhalb des Gehäuses (1) die Halterung als Dichtungsblech (8) umlaufend eingesetzt ist.

7. Filterkasten nach wenigstens einem der Ansprüche 1 bis 6, **dadurch gekennzeichnet, daß** gegenüberliegende Wannen (20) mit zumindest einer Traverse (24, 25) verbunden sind.

8. Filterkasten nach Anspruch 7, **dadurch gekennzeichnet, daß** der Traverse (24, 25) in etwa mittig eine Aufnahme (33) zugeordnet ist.

9. Filterkasten nach wenigstens einem der Ansprüche 1 bis 8, **dadurch gekennzeichnet, daß** das Gehäuse (1) eine Einschuböffnung (10.1) aufweist, in welche ein Auslaßeinsatz (27) wiederlösbar einsetzbar ist.

10. Filterkasten nach Anspruch 9, **dadurch gekennzeichnet, daß** der Auslaßeinsatz (27) mittels eines Befestigungselements (26) in der Aufnahme (33) der Traverse (25) wiederlösbar festgelegt ist.

11. Filterkasten nach Anspruch 10, **dadurch gekennzeichnet, daß** das Befestigungselement (26) mit Diagonalstreben (28.1, 28.2) des Auslaßeinsatzes (27) verbunden ist, wobei diese über Halteplättchen (32) mit einer Auslaßplatte (29) in Verbindung stehen.

## Claims

1. Filter box having a housing (1), in which a filter element (11) is detachably secured on a retaining means, which separates an upper chamber (13) from a lower chamber (14) within the housing (1) and defines an opening (10.2), through which the filter element (11) is inserted into the upper chamber (13), a seal (21) being provided between a circumferential sealing bar (22) of the filter element (11) and the retaining means (8), **characterised in that** the seal (21) is a gel-like fluid-sealing compound situated in a circumferential trough which is upwardly open, the sealing bar (22) being placed on the sealing compound (22).

2. Filter box according to claim 1, **characterised in that** a sealing strip (15) is circumferentially angled from the retaining means (8) to form the opening (10.2), said sealing strip also extending into the sealing compound (22) adjacent the sealing bars (22).

3. Filter box according to claim 1 or 2, **characterised in that** the trough (20) communicates with a bracket (17), and said bracket is detachably associated with the retaining means (8).

4. Filter box according to claim 3, **characterised in that** the bracket (17) is detachably securable on the retaining means (8) by means of at least one securing member (18) via a bent-over strip (19).

5. Filter box according to at least one of claims 1 to 4, **characterised in that** the housing (1) has lateral walls (6), in which a circumferential notch (7) is provided.

6. Filter box according to claim 5, **characterised in that** the retaining means is inserted circumferentially into the notch (7) internally of the housing (1) as a sealing plate (8).

7. Filter box according to at least one of claims 1 to 6, **characterised in that** oppositely situated troughs (20) are connected to at least one cross-piece member (24, 25).

8. Filter box according to claim 7, **characterised in that** a receiver (33) is associated substantially centrally with the cross-piece member (24, 25).

9. Filter box according to at least one of claims 1 to 8, **characterised in that** the housing (1) has an insert aperture (10.1), into which an outlet insert (27) is detachably insertable.

10. Filter box according to claim 9, **characterised in that** the outlet insert (27) is detachably secured by means of a securing member (26) in the receiver (33) of the cross-piece member (25).

11. Filter box according to claim 10, **characterised in that** the securing member (26) is connected to diagonal struts (28.1, 28.2) of the outlet insert (27), said diagonal struts communicating with an outlet plate (29) via small retaining plates (32).

## Revendications

1. Caisson de filtre comprenant un boîtier (1) dans lequel est fixé de manière amovible sur un support une cellule filtrante (11) qui sépare à l'intérieur du boîtier (1) un espace supérieur (13) et un espace inférieur (14) et délimite une ouverture (10.2) à travers laquelle la cellule filtrante (11) est montée dans l'espace supérieur (13), un joint d'étanchéité (21) étant prévu entre une barrette d'étanchéité (22) située à la périphérie de la cellule filtrante (11) et le support (8)
**caractérisé en ce que**
le joint d'étanchéité (21) est une masse d'étanchéité ayant la forme d'un gel, garnissant une cuvette périphérique ouverte vers le haut, la barrette d'étanchéité (22) étant posée sur la masse d'étanchéité (21).

2. Caisson de filtre selon la revendication 1,
**caractérisé en ce que**
le support (8) présente un bord rabattu formant une bande d'étanchéité (15) définissant périphériquement l'ouverture (10, 2) et plongeant dans la masse d'étanchéité (21) également à côté de la barrette d'étanchéité (22).

3. Caisson filtrant selon la revendication 1 ou 2,
**caractérisé en ce que**
la cuvette (20) est reliée à une cornière (17) associée de manière séparable au support (8).

4. Caisson de filtre selon la revendication 1 ou 2,
**caractérisé en ce que**
la cornière (17), est fixée par une aile (19), de manière amovible au support (8) par au moins un élément de fixation (18).

5. Caisson de filtre selon au moins l'une quelconque des revendications 1 à 4,
**caractérisé en ce que**
le boîtier (11) comporte des parois latérales (6) dans lesquelles a été formé un pli périphérique (7).

6. Caisson de filtre selon la revendication 5,
**caractérisé en ce que**
à l'intérieur du boîtier (1), le support constitué par une tôle d'étanchéité (8) est inséré par sa périphérie dans le pli (7).

7. Caisson de filtre selon au moins l'une quelconque des revendications 1 à 6,
**caractérisé en ce que**
des cuvettes (20) disposées face à face sont reliées par au moins une traverse (24, 25).

8. Caisson de filtre selon la revendication 7,
**caractérisé en ce qu'**
à la traverse (24, 25) est associée un réceptacle (33) situé à peu près en son milieu.

9. Caisson de filtre selon au moins l'une quelconque des revendications 1 à 8,
**caractérisé en ce que**
le boîtier (1) comporte une ouverture à coulissement (10.1) dans laquelle peut être monté de manière amovible un insert de sortie (27).

10. Caisson de filtre selon la revendication 9,
**caractérisé en ce que**
l'insert de sortie (27) est fixé de manière amovible par l'intermédiaire d'un élément de fixation (26) logé dans le réceptacle (33) de la traverse (25).

11. Caisson de filtre selon la revendication 10,
**caractérisé en ce que**
l'élément de fixation (26) est relié à des barres diagonales (28.1, 28.2)de l'insert de sortie (27) elles-mêmes reliées par des plaquettes de maintien (32) à une plaque de sortie (29).
